Europäisches Patentamt

European Patent Office

Office européen des brevets

(11) Veröffentlichungsnummer: **0 400 590**
**A1**

## (12) EUROPÄISCHE PATENTANMELDUNG

(21) Anmeldenummer: 90110213.7

(22) Anmeldetag: 30.05.90

(51) Int. Cl.5: **B01D 53/36, B01J 31/18**

(30) Priorität: 01.06.89 DE 3917900

(43) Veröffentlichungstag der Anmeldung:
05.12.90 Patentblatt 90/49

(84) Benannte Vertragsstaaten:
**AT BE CH DE FR GB IT LI LU NL SE**

(71) Anmelder: **Steinbach, Friedrich,
Prof.Dr.rer.nat.
Trenknerweg 133
D-2000 Hamburg 52(DE)**

(72) Erfinder: **Steinbach, Friedrich, Prof. Dr.
Trenknerweg 133
D-2000 Hamburg 52(DE)**
Erfinder: **Ellmers-Kutzinski, Reinhild, Dr.
Eidelstedter Weg 62
D-2000 Hamburg 20(DE)**
Erfinder: **Brunner, Andreas, Dr.
Susannenstrasse 14 a
D-2000 Hamburg 36(DE)**
Erfinder: **Müller, Holger, Dipl.-Chem.
Beim Pachthof 21
D-2000 Hamburg 74(DE)**

(54) **Verwendung eines trägergestützten Übergangsmetallphthalocyaninkatalysators zum Entfernen von sauerstoff- und/oder stickstoffhaltigen organischen Verbindungen aus Abgasen.**

(57) Verwendung eines trägergestützten Katalysators auf Basis von Übergangsmetallphthalocyaninen zur oxidativen Behandlung von Abgasen die sauerstoff- und/oder stickstoffhaltige flüchtige organische Verbindungen enthalten, welcher Katalysator durch Beladen eines Trägers mit wenigstens einem Übergangsmetallphthalocyanin und Aktivieren des beladenen Trägers mit

     (i) einem Gasgemisch, das Stickoxid und/oder Sauerstoff enthält, bei Temperaturen zwischen Raumtemperatur und 500° C,
oder mit

     (ii) einer Lösung, die Salpetersäure und/oder ein Oxidationsmittel enthält, erhältlich ist.

EP 0 400 590 A1

## Verwendung eines trägergestützten Übergangsmetallphthalocyaninkatalysators zum Entfernen von sauerstoff- und/oder stickstoffhaltigen organischen Verbindungen aus Abgasen

Die Erfindung betrifft die Verwendung eines trägergestützten Katalysators auf Basis von Übergangsmetallphthalocyaninen zur oxidativen Behandlung von Abgasen, die sauerstoff- und/oder stickstoffhaltige flüchtige organische Verbindungen enthalten.

Es ist bekannt daß aus technischen Metallphthalocyaninen und einem Träger ein Katalysator zum Entfernen von Stickoxiden, Kohlenmonoxid und/oder Restkohlenwasserstoffen aus Abgasen gebildet werden kann (DE-C-35 22 637 beziehungsweise EP-B1-0 228 398). Die Metallphthalocyanine werden dazu mit oxidierenden Gasmischungen behandelt, so daß in einem geregelten Teilabbau der stabilen Komplexe, unterstützt durch die komplexbedingte große Entfernung der Metallionen voneinander, eine hochungeordnete, vom stöchiometrischen Oxid sowohl wie von stöchiometrischen Metallkomplex stark abweichende, stabile hochaktive Katalysatorpräparation entsteht.

Für die der Umwandlung in die aktive Komponente (Modifizierung) vorausgehende Fixierung der Metallphthalocyanine auf Trägern sind dort mehrere Verfahren beschrieben. Dazu gehören die Tränkung des Trägers mit Lösungen und Suspensionen, die Fällung von Trägermaterialien aus Metallphthalocyaninsuspensionen mit anschließender Formung und Trocknung, die Überführung der Metallphthalocyanine in lösliche Derivate, so daß eine Tränkung erleichtert wird, und die Direktsynthese der Metallphthalocyanine aus löslichen Vorstufen auf den Trägern. Für den Fall, daß die Metallphthalocyanine auf einer Zwischenschicht und nicht direkt auf dem Träger aufgebracht werden sollen, kann diese Zwischenschicht vor dem Aufbringen der Metallphthalocyanine aber auch gleichzeitig mit den Aufbringen der Metallphthalocyanine in einem Arbeitsgang aufgebracht werden.

In der DE-C-35 22 637 ist die Verwendung der Metallphthalocyanine lediglich für die katalytische Umsetzung von NO, CO und Restkohlenwasserstoffen angesprochen.

Die Reinigung von Abgasen oder Abluft erzeugt hohe Kosten, an denen die Kosten für die Herstellung von Katalysatoren einen nicht unbeträchtlichen Anteil darstellen. Ferner werden die Kriterien für die zuträglichen unerwünschten und erlaubten Restgehalte ständig verschärft und auf neue Stoffe ausgedehnt, wobei diese Verschärfung auch in gesetzliche Regelungen eingegangen ist (Dynamisierungsklausel). Aus diesen Gründen ist eine Verbreiterung des Anwendungsbereiches preiswerter und bekannt wirksamer Katalysatoren wünschenswert. Hier ist insbesondere die Beseitigung jeglicher Art in Abgasen enthaltener sauerstoff-und/oder stickstoffhaltiger organischer Verbindungen zu nennen, wie dies in weitem Maße bereits gesetzlich vorgeschrieben ist und künftig zweifellos noch verschärft werden wird. Auch nach der schon vielfach praktizierten Rückgewinnung durch Kondensation und Sorption verbleibt ein Restgehalt in der Abluft, der durch katalytische Nachoxidation bei möglichst niedriger Temperatur zu unbedenklichen Bestandteilen abgebaut werden muß.

Der Erfindung liegt deshalb die Aufgabe zugrunde, preiswerte und leistungsfähige Katalysatoren bereitzustellen, mit denen sauerstoff- und/oder stickstoffhaltiger Verbindungen zuverlässig beseitigt werden können.

Diese Aufgabe wird erfindungsgemäß gelöst durch Verwendung eines trägergestützten Katalysators auf Basis von Übergangsmetallphthalocyaninen zur oxidativen Behandlung von Abgasen, die sauerstoff- und/oder stickstoffhaltigen flüchtige organische Verbindungen enthalten, welcher Katalysator durch

Beladen eines Trägers mit wenigstens einem Übergangsmetallphthalocyanin und Aktivieren des beladenen Trägers mit

(i) einem Gasgemisch, das Stickoxid und/oder Sauerstoff enthält, bei Temperaturen zwischen Raumtemperatur und 500° C, oder mit

(ii) einer Lösung, die Salpetersäure und/oder Oxidationsmittel enthält, erhältlich ist.

Für die erfindungsgemäßen Katalysatoren können grundsätzlich Phthalocyaninkomplexe aller Übergangsmetalle eingesetzt werden. Ein besonderer Vorteil der Erfindung liegt jedoch darin, daß es nicht notwendig ist, solche Übergangsmetalle einzusetzen, die sich durch einen hohen Preis oder besondere Toxizität auszeichnen, also etwa Gold, Silber oder die Platinmetalle beziehungsweise Chrom oder Nickel, obwohl auch diese Metalle mit guten Ergebnissen verwandt werden können. Bevorzugt werden Komplexe der Metalle V, W, Mn, Cu, Fe, Co und Ni eingesetzt, wobei auch mehr als nur ein Übergangsmetall verwandt werden kann. Besonders bevorzugt sind Kupferphthalocyanin, Eisenphthalocyanin und Manganphthalocyanin.

Als Träger können alle aus dem Stand der Technik bekannten und üblichen Materialien und Werkstoffe verwandt werden, insbesondere die in DE-C-35 22 637 und EP-B1-0 228 398 beschriebenen und benutzten Stoffe und Stoffmischungen.

Bevorzugte Träger sind Kieselgur, Siliciumdioxid, Cordierit, Steatit, Mullit, Aluminiumoxid, Ton, Kaolin und Perlit, Feldspäte, weiterhin Alumosilicate, insbesondere Zeolithe vom Typ A, X, Y oder ZSM sowie natürliche Zeolithe. Ferner sind bevorzugt Graphit, Magnesiumsilicate und -oxid, Zirkonsilicat und -oxid, Titandioxid und Siliciumcarbid und Metalle mit und ohne Oxidüberzüge.

Vorzugsweise haben die erfindungsgemäß verwandten Trägermaterialien eine mikroporöse Struktur.

Als besonders vorteilhaft haben sich Träger auf Cordieritbasis, insbesondere Cordierit-Wabenkörper sowie Aluminiumoxid und Zeolithe erwiesen. Diese Trägermaterialien können auch auf andere Substrate, etwa Metall, Glas, Keramik, Glas- oder Mineralfasern aufgebracht sein.

Die Trägermaterialien werden mit den Übergangsmetallphthalocyaninen beladen, wie in der DE-C-35 22 637 beziehungsweise EP-B1-0 228 398 beschrieben. Dies kann beispielsweise durch Tränken des Trägers mit einer Lösung oder Suspension der entsprechenden Metallphthalocyanins in Wasser oder einem organischen Lösungsmittel erfolgen, durch mechanisches Auf- oder Einbringen, Mischen der pulverförmigen Materialien und anschließend Formen des beladenen Trägers oder durch Auf- oder Einbringen einer Lösung oder Suspension einer Übergangsmetallverbindung, die sich in das gewünschte Übergangsmetallphthalocyanin umwandeln läßt, also durch Synthese des Übergangsmetallphthalocyanins auf dem Träger.

Die Mengen an auf- oder eingebrachtem Übergangsmetallphthalocyanin betragen im allgemeinen 2 bis 15 Gew.-%, vorzugsweise 5 bis 10 Gew.-%, bezogen auf das Gewicht des Trägermaterials.

Die erfindungsgemäßen trägergestützten Katalysatoren eignen sich zum Entfernen von Stickoxiden, Kohlenmonoxid und organischen Verbindungen aus Luft und Abgasen, beispielsweise aus Verbrennungsmotoren, Kraftwerken, insbesondere aber auch Anlagen, in denen organischen Chemikalien oder Lösungsmittel erzeugt, verarbeitet oder eingesetzt werden. Insbesondere eignen sich die erfindungsgemäßen Katalysatoren zur oxidativen Beseitigung von sauerstoff- und/oder stickstoffhaltigen flüchtigen organischer Verbindungen, wie Alkoholen, Ketonen, Aldehyden, Ethern, Säuren, Estern, Amiden und Aminen.

Von besonders günstiger Wirkung für eine hohe Aktivität der erfindungsgemäß verwandten Katalysatoren sind Zwischenschichten aus Oxiden eines oder mehrerer Übergangsmetalle, allgemein als Washcoats bezeichnet, wobei es weniger auf einen schichtweisen Aufbau, als auf eine innige Vermengung von Washcoat und katalytische Substanz ankommt. Die Zwischenschichten aus Übergangsmetalloxiden sollten deshalb vor oder zusammen mit den Übergangsmetallkomplexverbindungen auf den Träger auf- oder in diesen eingebracht werden. Die Aufbringung oder Einbringung der Washcoats erfolgt auf die oben beschriebene Weise. Die Menge an Übergangsmetalloxid beträgt im allgemeinen 0,5 bis 30 Gew.-%, vorzugsweise 2 bis 25 Gew.-%, zuzüglich zum Anteil der Komplexverbindung. Das Übergangsmetall der Oxid-Zwischenschicht kann das gleiche oder ein anderes wie das des Phthalocyanins sein.

Die gleichmäßige Verteilung sowohl der eingebrachten Katalysatorvorläufer als auch der aus ihnen erzeugten Katalysatoren im Trägervolumen bei vollständig imprägnierten Trägern (Vollkontakt) beziehungsweise in einer oberflächennahen Schicht bei nicht vollständig imprägnierten Trägern ist durch infrarotspektroskopische Untersuchungen von Brüchen, Schnitten und Schliffen belegt. Durch die mit den genannten Präparationsmethoden erreichte innige Vermengung von Katalysatoren und Träger sind die Katalysatoren auch bei sehr hohen Volumengeschwindigkeiten (SV) von bis zu $10^6$ h$^{-1}$ gegenüber Mitführung durch den hohen Gasstrom beständig. Außerdem enthält in vollständig imprägnierten Trägern bei Oberflächenabtrag durch Staub im Abgas die ständig neu erzeugte Oberfläche stets aktiven Katalysator.

Die Aktivierung des mit wenigstens einem Übergangsmetallphthalocyanin beladenen Trägers ist in den DE-C-35 22 637 beziehungsweise EP-B1-0 228 398 beschrieben. Sie kann mit Hilfe eines Gasgemisches erfolgen, das Stickoxid und/oder Sauerstoff enthält. In der Regel wird ein Inertgas verwandt, beispielsweise Stickstoff oder Argon, dem eine bestimmte Menge Stickoxid und/oder Sauerstoff zugemischt wird. Als Stickoxid kann sowohl NO als auch $NO_2$ verwandt werden, wobei NO bevorzugt ist. Als weitere Bestandteile des Aktivierungsgasgemisches, mit denen besonders gute Ergebnisse erzielt werden, kommen CO und $NH_3$ in Frage.

Die Aktivierung des beladenen Trägers erfolgt bei einer Temperatur zwischen Raumtemperatur und 500° C. Im allgemeinen wird dazu der beladene Träger im Aktivierungsgasgemisch über einen Zeitraum von 1 bis 10 Stunden von Raumtemperatur auf eine Temperatur zwischen 80 und 500° C, vorzugsweise zwischen 180 und 450° C erhitzt und gegebenenfalls bis zu 10 Stunden auf der Endtemperatur gehalten.

Das Aktivierungsgasgemisch enthält die aktivierenden Komponenten im allgemeinen in Mengen von 250 ppm bis 5 %, bezogen auf das Volumen. Der Sauerstoffgehalt beträgt vorzugsweise 0,1 bis 25 % Vol.-& und der Gehalt an NO und anderer gegebenenfalls vorhandener Gase 500 bis 5000 ppm. Besonders bevorzugt ist ein Gehalt von jeweils etwa 1000 ppm NO, CO und $NH_3$ sowie von etwa 1 bis 2% $O_2$. Die Aktivierung kann auch unter Verwendung von Luft erfolgen.

Alternativ zur Aktivierung mit einem Gasgemisch bei erhöhten Temperaturen kann der beladene Träger auch mit einer Lösung, die Salpetersäure und/oder ein Oxidationsmittel enthält, erfolgen. Als Lösungsmittel wird vorzugsweise Wasser oder eine wäßrige organische Lösung verwandt, die gegen Salpetersäure inert ist. Der Gehalt an Salpetersäure beträgt im allgemeinen zwischen 1 und 20 Gew.-%, der an Oxidationsmittel im allgemeinen zwischen 2 und 20 Gew.-%. Als weitere Oxidationsmittel können salpetrige Säure sowie Nitriersäure und Lösungen von Stickoxiden verwandt werden. Die Aktivierung erfolgt vorzugsweise in der Wärme, beispielsweise bei Temperaturen zwischen 20 und 50° C.

Die Aktivierung der Übergangsmetallkomplexverbindung kann auch vor dem Beladen des Trägers in Lösung stattfinden, wobei die oben erwähnte Salpetersäure beziehungsweise Oxidationsmittellösung verwandt wird.

Bei den erfindungsgemäß eingesetzten Komplexen ist ein Wechselwirkung mit Übergangsmetalloxiden festzustellen, dergestalt, daß die Temperaturen des oxidativen Teilabbaus mittels oxidierender oder nitrierender Gase und Dämpfe in Gegenwart der innig vermengten Übergangsmetalloxide deutlich niedriger liegen als die bekannten Stabilitätsgrenzen gegenüber oxidierenden Atmosphären der jeweiligen Verbindungen ohne Kontakt zu Übergangsmetalloxiden.

Es ist bekannt, daß auch Metalloxide und Mischungen derselben vielfältig für katalytische Reaktionen mit NO und auch für Oxidationen eingesetzt werden. Sorgfältige Prüfung durch Aktivitäts- und Umsatzmengen, insbesondere durch Untersuchung der Kennlinien des Umsatzes in Abhängigkeit von der Temperatur ergab aber, daß die durch gemeinsames Auf- beziehungsweise Einbringen von Metalloxid und Metallkomplex auf beziehungsweise in Trägern erzeugten erfindungsgemäß einsetzbaren Katalysatoren sich von solchen Präparationen, bei denen nur das Metalloxid auf-beziehungsweise eingebracht ist, unterscheiden. Diese Prüfung ist besonders überzeugend, wenn erst das Übergangsmetalloxid eingeführt. dann dessen Aktivität kontrolliert und anschließend der Metallkomplex dazu eingeführt und modifiziert wird. Es ergeben sich deutlich Unterschiede der Umsatzkennlinien gegenüber den nur mit Oxid beladenen Trägern, insbesondere im niedrigen Temperaturbereich unterhalb 250° C.

Die starken Oberflächenunterschiede zwischen den erfindungsgemäß verwandten aktiven Katalysatorpräparationen und den Oxiden werden weiterhin in rasterelektronenmikroskopischen Aufnahmen der Oberflächen deutlich.

Photoelektronenspektroskopische Untersuchungen zeigen, daß auch nach dem Abbau der Komplexe durch nitrierende oder oxidierende Behandlung noch Bestandteile der organischen Komponenten in den aktiven Oberflächen enthalten sind.

Die Erfindung wird durch die nachfolgenden Beispiele näher beschrieben.

Beispiele

Nachfolgend ist die Erfindung anhand von Beispielen näher erläutert. In den Beispielen wird zunächst die Herstellung der Katalysatoren auf den Trägern beschrieben. Sofern es sich um die Aufbringung durch Tränken der Träger mittels Lösungen oder Suspensionen handelt, ist nur die Zusammensetzung der Tränklösung oder Tränksuspension angegeben. Als Trägerkörper werden überwiegend Cordierit-Wabenkörper verwandt, in der Regel vom Querschnitt 2,5 x 2,5 cm$^2$ und von 5 cm oder 10 cm Länge mit 16 Kanälen auf dem angegebenen Querschnitt. Die Tränkung geschieht zu wiederholten Malen, bis die gewünschte angegebene Beladung erreicht ist. Zwischen den Tränkungen werden die Träger getrocknet, bevorzugt bei 110 bis 120° C. Für die Aktivierung wird ein Gasgemisch benutzt, dessen Zusammensetzung jeweils angegeben wird. Im Anschluß an die Beschreibung der Herstellung und Aktivierung werden die Aktivitäten, d. h. die Umsätze, die in verschiedenen katalytischen Reinigungsprozessen erzielt werden, in tabellarischer Form angegeben.

Beispiel 1 Kupferphthalocyanin auf Manganoxid-Kupferoxid-Washcoat

Tränklösungen:
1. 123 g Mn(CH$_3$COO)$_2$ x 4 H$_2$O in 500 ml Wasser;
2. 12 g Cu(NO$_3$)$_2$ x 3 H$_2$O in 500 ml Wasser;
3. Suspension von 50 g CuPc in 500 ml Ameisensäure. Träger: Cordierit-Wabenkörper..
Beladung durch aufeinanderfolgende Tränkungen bei Zimmertemperatur bis zu den angegebenen Werten:
1. 15 Gew.-% Manganacetat; 2. 1,5 Gew.-% Kupfernitrat; 3. 9 Gew.-% CuPc (Kupferphthalocyanin).
Aktivierung im Gasgemisch aus je 1000 ppm NO, NH$_3$, 1 % O$_2$, Rest N$_2$, mit SV = 3000 h$^{-1}$ über 5 h von Zimmertemperatur auf 320° C ansteigend.

| Aktivität Reaktion | Umsatz(%) | Temp.° C | Testgas. SV = 3000 h⁻¹ |
|---|---|---|---|
| NO-Reduktion | 89 | 189 | je 1000 ppm NO, NH₃, 1% O₂, Rest N₂; |
| CO-Oxidation | 100 | 110 | 1100 ppm CO, 2500 ppm O₂, Rest N₂; |
| Propan-Ox. | 91 | 319 | 1000 ppm Propan in Luft |
| Ethanol-Ox. | 98 | 206 | 1800 ppm Ethanol in Luft |
| Aceton-Ox. | 92 | 218 | 2000 ppm Aceton in Luft |
| Ethylacetat-Ox. | 97 | 214 | 500 ppm Ethylacetat in Luft |
| Ether-Ox. | 93 | 239 | 1500 ppm Ether in Luft |
| Benzol-Ox. | 93 | 260 | 300 ppm Benzol in Luft |
| Benzylamin-Ox. | 89 | 240 | 1100 ppm Benzylamin in Luft |
| Anilin-Ox | 90 | 245 | 1200 ppm Anilin in Luft |

Beispiel 2 Kupferphthalocyanin auf Manganoxid-Washcoat

Tränklösungen:
1. 125 g $Mn(CH_3COO)_2$ x 4 $H_2O$ in 500 ml Wasser;
2. Suspension von 20 g CuPc in 200 ml Ameisensäure. Träger: Cordierit-Wabenkörper..
Beladung durch Tränkungen bis zu folgenden Werten:
1. 15 Gew.-% Manganacetat; 2. 9 Gew.-% CuPc.
Aktivierung im Gasgemisch aus je 1000 ppm NO und NH₃, 1 % O₂, Rest N₂, bei SV = 3000 h⁻¹ über 5 h von Zimmertemperatur auf 320° C ansteigend.

| Aktivität Reaktion | Umsatz(%) | Temp.° C | Testgas. SV = 3000 h⁻¹ |
|---|---|---|---|
| NO-Reduktion | 92 | 180 | je 1000 ppm NO, NH₃, 1% O₂, Rest N₂; |
| CO-Oxidation | 100 | 115 | 1100 ppm CO, 2500 ppm O₂, Rest N₂; |
| Propan-Ox. | 91 | 328 | 1000 ppm Propan in Luft |
| Ethanol-Ox. | 93 | 210 | 1800 ppm Ethanol in Luft |
| Aceton-Ox. | 90 | 225 | 2000 ppm Aceton in Luft |
| Ethylacetat-Ox. | 96 | 220 | 500 ppm Ethylacetat in Luft |
| Ether-Ox. | 92 | 246 | 1500 ppm Ether in Luft |
| Benzol-Ox. | 92 | 297 | 300 ppm Benzol in Luft |
| Benzylamin-Ox. | 86 | 249 | 1100 ppm Benzylamin in Luft |
| Anilin-Ox | 90 | 251 | 1200 ppm Anilin in Luft |

Beispiel 3 Kupferphthalocyanin auf Kobaltoxid-Kupferoxid-Washcoat

Tränklösungen:
1. 148 g $Cu(NO_3)_2$ x 3 $H_2O$ und 146 g $Co(NO_3)_2$ x 6 $H_2O$ gemeinsam in 500 ml Wasser;
2. Suspension von 50 g CuPc in 500 ml Ameisensäure. Träger: Cordierit-Wabenkörper.
Tränkung bis die Beladungen erreicht sind:
1. 24 Gew.-% Kupfer-Kobaltnitratgemisch; 2. 9 Gew.-% CuPc.
Aktivierung im Gasgemisch von je 1000 ppm NO und NH₃, 1 % O₂, Rest N₂, mit SV = 3000 h⁻¹ über 5 h von Zimmertemperatur auf 320° C ansteigend.

| Aktivität Reaktion | Umsatz(%) | Temp. °C | Testgas. SV = 3000 h⁻¹ |
|---|---|---|---|
| NO-Reduktion | 90 | 150 | 1000 ppm NO, 1200 ppm $NH_3$, 1% $O_2$. Rest $N_2$; |
|  | 80 | 130-180 |  |
| CO-Oxidation | 100 | 105 | 1100 ppm CO, 2500 ppm $O_2$, Rest $N_2$; |
| Propan-Ox. | 95 | 325 | 1000 ppm Propan in Luft |
| Ethanol-Ox. | 100 | 216 | 1800 ppm Ethanol in Luft |
| Aceton-Ox. | 95 | 225 | 2000 ppm Aceton in Luft |
| Ethylacetat-Ox. | 100 | 200 | 500 ppm Ethylacetat in Luft |
| Ether-Ox. | 95 | 221 | 1500 ppm Ether in Luft |
| Benzol-Ox. | 90 | 260 | 300 ppm Benzol in Luft |
| Benzylamin-Ox. | 100 | 275 | 1100 ppm Benzylamin in Luft |
| Anilin-Ox | 90 | 263 | 1200 ppm Anilin in Luft |

Entsprechende Ergebnisse werden erhalten, wenn statt Kupferphthalocyaninen die Phthalocyanine von Mn, Fe, Co und Ni verwandt werden.

Beispiel 4 Manganphthalocyanin auf Manganoxid-Kupferoxid-Washcoat

Tränklösungen:
1. 130 g Manganacetat, $Mn(CH_3COO)_2$ x 4 $H_2O$ in 500 ml Wasser;
2. 12 g Kupfernitrat, $Cu(NO_3)_2$ x 3 $H_2O$ in 500 ml Wasser;
3. Suspension von 60 g MnPc in 500 ml Ameisensäure. Träger: Cordierit-Wabenkörper..

Beladung durch aufeinanderfolgende Tränkungen bei Zimmertemperatur bis zu den angegebenen Werten:
1. 15 Gew.-% Manganacetat; 2. 1,5 Gew.-% Kupfernitrat; 3. 10,5 Gew.-% Manganphthalocyanin.
Aktivierung durch Behandlung im Gasgemisch aus je 1000 ppm NO, $NH_3$, 1 % $O_2$, Rest $N_2$, mit SV = 3000 h⁻¹ innerhalb 5 h von Zimmertemperatur auf 280° C ansteigend.

| Aktivität Reaktion | Umsatz(%) | Temp. °C | Testgas. SV = 3000 h⁻¹ |
|---|---|---|---|
| NO-Reduktion | 89 | 175 | je 1000 ppm NO, $NH_3$, 1% $O_2$, Rest $N_2$; |
| Ethanol-Ox. | 90 | 245 | 1800 ppm Ethanol in Luft |
| Aceton-Ox. | 90 | 235 | 2000 ppm Aceton in Luft |
| Ethylacetat-Ox. | 90 | 248 | 500 ppm Ethylacetat in Luft |
| Ether-Ox. | 90 | 265 | 1500 ppm Ether in Luft |
| Benzol-Ox. | 95 | 297 | 300 ppm Benzol in Luft |
| Benzylamin-Ox. | 80 | 255 | 1100 ppm Benzylamin in Luft |
| Anilin-Ox | 89 | 305 | 1200 ppm Anilin in Luft |
| Propan-Ox. | 90 | 345 | 1000 ppm Propan in Luft |
| CO-Oxidation | 98 | 160 | 1100 ppm CO, 2500 ppm $O_2$, Rest $N_2$; |

Beispiel 5 Eisenphthalocyanin auf Eisenoxid-Washcoat

Tränklösungen:
1. 80 g Eisennitrat in 200 ml Wasser;
2. Suspension von 80 g Eisenphthalocyanin in 500 ml Ameisensäure. Träger: Cordierit-Wabenkörper.

Beladung durch mehrfache Tränkung bis zu
1. 7 Gew.-% Eisennitrat; 2. 12 Gew.-% Eisenphthalocyanin.
Aktivierung durch Behandlung im Gasgemisch aus je 1000 ppm NO und $NH_3$, 1 % $O_2$, Rest $N_2$, mit SV = 3000 h⁻¹, innerhalb 8 h auf 340° C ansteigend.

| Aktivität Reaktion | Umsatz(%) | Temp. °C | Testgas. SV = 3000 h$^{-1}$ |
|---|---|---|---|
| NO-Reduktion | 85 | 310 | je 1000 ppm NO, NH$_3$, 1% O$_2$, Rest N$_2$; |
| Ethanol-Ox. | 92 | 275 | 1800 ppm Ethanol in Luft |
| Aceton-Ox. | 86 | 260 | 2000 ppm Aceton in Luft |
| Ethylacetat-Ox. | 90 | 270 | 500 ppm Ethylacetat in Luft |
| Ether-Ox. | 90 | 295 | 1500 ppm Ether in Luft |
| Benzol-Ox. | 96 | 320 | 300 ppm Benzol in Luft |
| Benzylamin-Ox. | 80 | 285 | 1100 ppm Benzylamin in Luft |
| Anilin-Ox | 89 | 335 | 1200 ppm Anilin in Luft |
| Propan-Ox. | 91 | 360 | 1000 ppm Propan in Luft |

**Ansprüche**

1. Verwendung eines trägergestützten Katalysators auf Basis von Übergangsmetallphthalocyaninen zur oxidativen Behandlung von Abgasen, die sauerstoff- und/oder stickstoffhaltige flüchtige organischer Verbindungen enthalten, welcher Katalysator durch Beladen eines Trägers mit wenigstens einem Übergangsmetallphthalocyanin und Aktivieren des beladenen Trägers mit

(i) einen Gasgemisch, das Stickoxid und/oder Stauerstoff enthält, bei Temperaturen zwischen Raumtemperatur und 500° C,

oder mit

(ii) einer Lösung, die Salpetersäure und/oder ein Oxidationsmittel enthält, erhältlich ist.

2. Verwendung nach Anspruch 1, wobei der Katalysatorträger zusätzlich zum Übergangsmetallphthalocyanin mit wenigstens einem Übergangsmetalloxid beladen ist.

3. Verwendung nach Anspruch 1 oder 2, wobei das Übergangsmetall wenigstens eines aus Cr, Mo, Mn, Fe, Co, Ni oder Cu ist.

4. Verwendung nach einem der Ansprüche 1 bis 3, wobei der Träger mit Kupferphthalocyanin, Eisenphthalocyanin oder Manganphthalocyanin und Eisen-, Mangan-, Kobalt-und/oder Kupferoxid beladen ist.

5. Verwendung nach einem der Ansprüche 1 bis 4, wobei als Trägermaterial Aluminiumoxide, Siliciumdioxid, Silikate, Zeolithe oder Alumosilikate verwandt werden.

6. Verwendung nach Anspruch 5, wobei als Träger ein Cordierit- oder Mullit-Wabenkörper verwandt wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | WO-A-8 700 077 (F. STEINBACH) <br> * Ansprüche 1-10 * <br> --- | 1-6 | B 01 D 53/36 <br> B 01 J 31/18 |
| A | US-A-4 672 047 (T. CHANDLER) <br> * Ansprüche 1-8 * <br> --- | 1-6 | |
| A | DE-A-2 743 031 (H.-J. JOSWIG) <br> * Ansprüche 1-9 * <br> --- | 1-6 | |
| A | DE-A-1 542 520 (UNIVERSAL OIL PRODUCTS) <br> * Ansprüche 1-5 * <br> --- | 1-6 | |
| A | FR-A-2 588 266 (INSTITUT FRANCAIS DU PETROLE) <br> * Ansprüche 1-9 * <br> --- | | |
| A | EP-A-0 193 974 (SUMITOMO CHEMICAL CORP.) <br> * Anspruch 1 * <br> ----- | | |

**RECHERCHIERTE SACHGEBIETE (Int. Cl.5)**

B 01 D
B 01 J

Der vorliegende Recherchenbericht wurde für alle Patentansprüche erstellt

| Recherchenort | Abschlußdatum der Recherche | Prüfer |
|---|---|---|
| DEN HAAG | 25-07-1990 | KANOLDT W.W. |